# EUROPEAN PATENT APPLICATION

(11) **EP 0 882 778 A2**
(43) Date of publication of application: **09.12.1998**
(21) Application number: 98304397.7
(22) Date of filing: 03.06.1998
(51) Int. Cl.: C10G 29/20, C10L 1/22, C10L 3/00, C02F 1/20, C02F 1/54

(54) **Composition and method for sweetening gaseous or liquid hydrocarbons, aqueous systems and mixtures thereof**

(30) Priority: 04.06.1997 US 868767
(71) Applicant: NALCO/EXXON ENERGY CHEMICALS, L.P., Sugarland, TX 77478 (US)
(72) Inventor: Yon-Hin, Paul, Houston, Texas 77069 (US)
(74) Representative: Harrison, David Christopher

(57) **Abstract**

A composition and method are disclosed for sweetening gaseous or liquid hydrocarbons, aqueous systems and mixtures thereof with a non-regenerative scavenger having the chemical formula 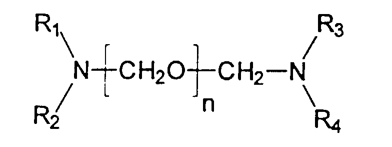 wherein n is an integer from 1 to 6 and R₁, R₂, R₃ and R₄ are independently selected as straight chain or branched alkyl groups containing from 1 to 20 carbon atoms, aryl groups. alkylaryl groups, heterocyclic groups, cycloalkyl groups, or (CH₂)ₙ-OR₅ groups with R₅ being hydrogen or an alkyl group having from 1 to 8 carbon atoms and n being an integer from 1 to 6. Altematively, R₁ and R₂ may be linked together and R₃ and R₄ may be linked together to form alkylene rings having from 4 to 5 carbon atoms.

## Description

This invention relates generally to the treatment of gaseous and liquid media and, more particularly, to a composition for scavenging hydrogen sulfide, mercaptans and organic sulfides from gaseous or liquid hydrocarbons, aqueous systems and mixtures thereof.

The terms "scavenging" and "sweetening" are used synonymously herein to mean the reduction or removal of sulfur compounds from gaseous and liquid media.

Hydrogen sulfide is a colorless, toxic, corrosive and malodorous gas present in various gaseous and liquid media, such as natural gas, crude oil, refinery gas, coal gas streams, tars, asphalts, coke gases, ammonia synthesis gas, gases from sulfurization plants, sewage, and industrial gas streams or effluents. The hydrogen sulfide level in natural gas will usually vary from barely detectable amounts to more than 3000 ppm. Most consumers of natural gas require less than 4 ppm of hydrogen sulfide in the gas. Pipeline and storage regulations also require pipeline hydrocarbon liquids to contain less than 4 ppm of hydrogen sulfide. At levels above 600 ppm, hydrogen sulfide can be fatal in a matter of minutes. In addition, hydrogen sulfide will corrode all metals associated with gas transporting, processing, and handling systems and may lead to the premature failure of most systems.

Accordingly, due to its hazardous nature, the release of hydrogen sulfide into the environment is strictly regulated by the Environmental Protection Agency, the Department of Environmental Resources, and other regulatory agencies around the world. Tremendous efforts and capital costs are spent annually to reduce the hydrogen sulfide levels to safe ones. Therefore, it is desirable to develop better methods and compositions for scavenging hydrogen sulfide in gaseous or liquid hydrocarbons and aqueous systems.

Various methods, compositions and technologies have been developed in the past and are being practiced to remove or reduce hydrogen sulfide from gaseous and liquid media. In brief, these methods may be divided into regenerative and non-regenerative technologies.

Regenerative methods normally make use of scavenging chemicals that can be recycled after use. Such technology was developed to remove hydrogen sulfide in a continuous way for large processing plants. One such method makes use of an alkanolamine such as monoethanolamine (MEA), diethanolamine (DEA), and/or triethanolamine (TEA). In practice, natural gas contaminated with hydrogen sulfide or "sour" natural gas is circulated upward through a treating tower and mixed with alkanolamine to form a hydrosulfite of the alkanolamine. The resulting reaction products and alkanolamine, are then passed through a stripping column to separate the alkanolamine, which is returned to the treating tower. The reaction products are then sent to a reactor where they are heated to reverse the process, regenerate the alkanolamine and release the hydrogen sulfide. The hydrogen sulfide may then be flared as sulfur dioxide, further reacted to generate solid disposal or sent to a sulfur manufacturing plant.

In contrast, non-regenerative methods make use of scavenging chemicals that react with hydrogen sulfide to form a non-toxic compound or compounds in the fluid. Several organic compounds have been patented as non-regenerative hydrogen sulfide scavengers, such as those disclosed in the following patents:

U.S. Pat. No. 4,680,127 (Edmondson) discloses a method of reducing the amount of hydrogen sulfide in aqueous or wet gaseous mediums without solids formation by using an effective amount of glyoxal in combination with formaldehyde or glutaraldehyde.

U.S. Pat. No. 4,978,512 (Dillon) discloses a method of reducing hydrogen sulfide and organic sulfides from gaseous and/or liquid hydrocarbon streams with a composition consisting of the reaction product of (i) a lower alkanolamine with (ii) a lower aldehyde.

U.S. Pat. No. 5,074,991 (Weers) discloses a method of scavenging hydrogen sulfide with a composition consisting of a diaminomethane compound.

U.S. Pat. No. 5,169,411 (Weers) discloses a method of suppressing the level of hydrogen sulfide in petroleum residual by incorporating an effective amount of certain imines.

U.S. Pat. No. 5,266,185 (Weers) discloses a method of suppressing hydrogen sulfide with a compound corresponding to the reaction product of a heterocyclic aldehyde such as furfural and an organic primary amine.

U.S. Pat. No. 5,284,576 (Weers) discloses a method of scavenging hydrogen sulfide with a composition prepared by reacting an alkylenepolyamine, including diethylenetriamine, and formaldehyde.

U.S. Pat. No. 5,314,672 (Vasil) discloses a method of reducing hydrogen sulfide levels by contacting natural gas with the reaction product of ethylenediamine and 50% uninhibited aqueous formaldehyde.

U.S. Pat. No. 5,347,004 (Rivers) discloses a method of reducing the levels of hydrogen sulfide in liquid or gaseous hydrocarbon streams with a mixture of hexahydrotriazines prepared by reacting a mixture of amines with a mixture of aldehydes.

U.S. Pat. No. 5,354,453 (Bhatia) discloses a method of scavenging hydrogen sulfide and mercaptans in petroleum liquid by the use of trialkylhexahydrotriazines wherein at least one alkyl group, and preferably all three, contain from 7 to 20 carbon atoms.

U.S. Pat. No. 5,462,721 (Pounds) discloses a method of reducing hydrogen sulfide and organic sulfides in gaseous or liquid hydrocarbon streams or mixtures thereof by contacting the streams with a composition consisting of the reaction product of aminoethylpiperazine, an alkanolamine, an etheramine, a polyalkyleneamine, or a polyoxyalkyleneamine with a C1 to C4 aldehyde.

U.S. Pat. No. 5,480,860 (Dillon) discloses a method of reducing the levels of hydrogen sulfide and organic sulfides in sewage gas with a composition consisting a trisubstituted hexahydro-s-triazine.

U.S. Pat. No. 5,552,060 (Roof) discloses a method of scavenging hydrogen sulfide from aqueous and hydrocarbon substrates using an epoxide.

Despite all of the above patents describing methods and compositions of amine-aldehyde condensation reaction products for suppressing hydrogen sulfide in gaseous or liquid hydrocarbon fluids and aqueous systems, there is still a need for improved non-regenerative scavengers which can reduce the amount of hydrogen sulfide, as well as mercaptans and organic sulfides, to acceptable levels at both ambient and elevated temperatures.

The present invention is directed to a composition for scavenging hydrogen sulfide, mercaptans, and organic sulfides from gaseous or liquid hydrocarbons, aqueous systems and mixtures thereof having the chemical formula 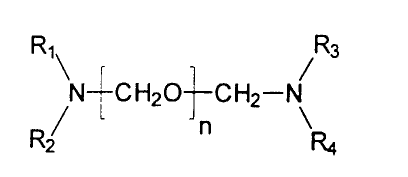 wherein n is an integer from 1 to 6 and R₁, R₂, R₃ and R₄ are independently selected as straight chain or branched alkyl groups containing from 1 to 20 carbon atoms, aryl groups, alkylaryl groups, heterocyclic groups, cycloalkyl groups, or (CH₂)ₙ-OR₅ groups with R₅ being hydrogen or an alkyl group having from 1 to 8 carbon atoms and n being an integer of from 1 to 6.

In another important embodiment, R₁ and R₂ are linked together and R₃ and R₄ are linked together to form alkylene rings having from 4 to 5 carbon atoms.

Compositions of the present invention usually contain a mixture of compounds of the formula above, having the same substituents but varying values of n. It is preferred that the majority of the compounds have values of n of 1, 2 or 3.

The scavenger position of the present invention effectively reduces the amount of hydrogen sulfide, mercaptans and organic sulfides in gaseous or liquid hydrocarbons and aqueous systems to acceptable levels at both ambient and elevated temperatures.

The non-regenerative scavenger composition of the present invention is prepared by reacting a mixture of polyoxymethylene glycols with a secondary amine in the presence of excess polyoxymethylene glycols. Although several polyoxymethylene glycol mixtures known to those skilled in the art may be used in the practice of the present invention, paraformaldehyde is preferred. Suitable secondary amines include dibutylamine, morpholine and diethanolamine.

The reaction is typically carried out using conditions known to those skilled in the art for preparing products based on the reaction of formalin with an amine. In the present case, if a totally hydrocarbon soluble product is desired, a hydrocarbon solvent can be added as part of the reaction mixture. When the reaction is complete, the water produced as a product of the reaction is removed by methods known to those skilled in the art. For example, when the secondary amine is dibutylamine, the resulting product is completely hydrocarbon soluble. If the secondary amine is diethanolamine, the mixture of products of the reaction is water soluble and can be used to scavenge hydrogen sulfide in streams partially or completely made up of aqueous or water-soluble media.

The resulting scavenger composition has the formula 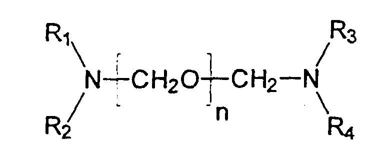 wherein n is an integer from 1 to 6 and R₁, R₂, R₃ and R₄ are independently selected as straight chain or branched alkyl groups containing from 1 to 20 carbon atoms, aryl groups, alkylaryl groups, heterocyclic groups with an oxygen, nitrogen or sulfur atom in the ring all containing up to 20 carbon atoms, cycloalkyl groups containing from 5 to 6 carbon atoms, or (CH₂)ₙ-OR₅ groups with R₅ being hydrogen or alkyl groups having from 1 to 8 carbon atoms and n being an integer from 1 to 6.

It is preferred that R₁, R₂, R₃ and R₄ of the scavenger composition be straight chain or branched alkyl groups containing from 1 to 20 carbon atoms, and more preferably having from 1, 2 or 3 to 5, 6 or 8 carbon atoms, with 4 carbon atoms being most preferred, and in particular, n-butyl.

In another important embodiment of the present invention, R₁ and R₂ are linked together and R₃ and R₄ are linked together to form alkylene rings having from 4 to 5 carbon atoms. Each alkylene ring may include an oxygen, nitrogen or sulfur atom instead or additional to the carbon atoms, and thus forming a ring structure having 5, 6 or 7 atoms.

The non-regenerative scavenger composition of the present invention may be used in a variety of applications. For instance, the composition may be used to treat hydrocarbon streams, such as crude oil, gasoline, distillate fuels, kerosene, fuel oil, heating oils and bunker fuel oils; to treat sour gas and hydrocarbon streams flowing in a pipeline; or to inhibit the liberation of hydrogen sulfide from fluids, such as crude oil and petroleum residuum, during their production, transportation and storage. The streams may be treated by injecting the scavenger composition in-line into the streams, injecting it at the well-head or mixing it with the contaminated fluid. The scavenger composition is preferably added to the streams in an amount of about 10 to about 100,000 ppm by volume to effectively reduce the amount of hydrogen sulfide, mercaptans and organic sulfides in the streams.

### EXAMPLES

The following examples are intended to be illustrative of the present invention and to teach one of ordinary skill how to make and use the invention. These examples are not intended to limit the invention or its protection in any way.

### Example 1

### Synthesis of 1,ω-bis-[N,N-dibutylamino]-poly(methyleneoxy)methylene compounds

129.25 grams (1 mole) of dibutylamine followed by 60 grams (2 mole) of paraformaldehyde were added to a four neck round bottomed flask equipped with a mechanical stirrer, reflux condenser and thermocouple. The mixture was mechanically stirred for 15 minutes at room temperature and was then heated to a temperature between 60 and 80°C for a duration of two hours. The resulting mixture was then transferred while hot to a separatory funnel and allowed to stand for one hour, at which time it separated into a lower aqueous phase and a top organic phase. The organic phase was collected and analyzed by NMR spectroscopy in deuterated benzene. The NMR data revealed that the composition was a mixture of 1,ω-bis-[N,N-dibutylamino]-poly(methyleneoxy)methylene compounds with the following formula 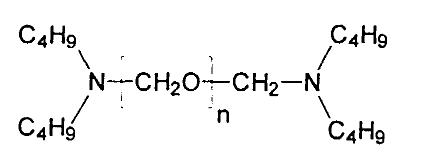 where n= 1 to 6

Based on the NMR data, the major portion of the composition was made up of compounds with n=1, 2 and 3.

The above preparation was also made in the presence of an organic solvent, namely heavy aromatic naphtha. The water formed during the reaction was removed by distillation to generate a colorless, clear product.

### Example 2

### Synthesis of 1,ω-bis-morpholino-poly(methyleneoxy)methylene compounds

43.56 grams (0.5 mole) of morpholine followed by 30 grams (1 mole) of paraformaldehyde were added to a four neck round bottomed flask equipped with a mechanical stirrer, reflux condenser and thermocouple. The mixture was mechanically stirred for 15 minutes as the temperature of the reaction mixture slowly rose. The mixture was then heated to a temperature between 60 and 80°C for a duration of two hours. The reaction mixture was cooled to room temperature to afford a clear liquid. It is interesting to note that the water formed during the reaction was totally soluble in the new composition. The NMR data revealed that the composition was a mixture of 1,ω-bis-morpholino-poly(methyleneoxy)methylene compounds with the following formula 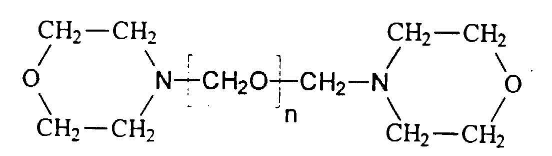 where n= 1 to 6

### Example 3

### Synthesis of 1,ω-bis-[N,N-diethanolamino]-poly(methyleneoxy)methylene compounds

52.57 grams (0.5 mole) of morpholine followed by 30 grams (1 mole) of paraformaldehyde were added to a four neck round bottomed flask equipped with a mechanical stirrer, reflux condenser and thermocouple. The mixture was mechanically stirred for 15 minutes as the temperature of the reaction mixture slowly rose. The mixture was then heated to a temperature between 60 and 80°C for a duration of two hours. The reaction mixture was cooled to room temperature to afford a clear light yellow liquid. The resulting water soluble composition was characterized by NMR spectroscopy to be a mixture of 1,ω-bis-[N,N-diethanolamino]-poly(methyleneoxy)methylene compounds with the following formula 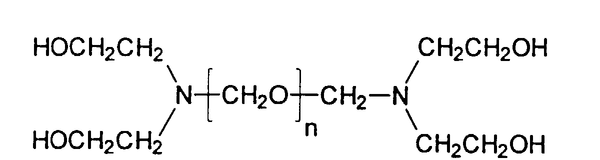 where n= 1 to 6

### Example 4

Experiments were carried out to demonstrate the effectiveness of the new compositions vis-a-vis other scavengers using the Can Test Method. In this method, a one quart metallic can is filled with 500 mL of a sour stream at room temperature. The metallic can is quickly capped to ensure that no hydrogen sulfide gas is lost to the environment. The container is shaken in a shaker for 30 seconds and then either allowed to stand at room temperature for one hour or heated in a water bath at a temperature of 120 to 180°F for one hour. The container is then reshaken for 30 seconds and the metallic cap is immediately replaced by a one-hole rubber stopper carrying a Drager hydrogen sulfide detection tube. The exposed end of the Drager tube is connected to a pump to withdraw the hydrogen sulfide gas through the tube which becomes discolored by the gas. The concentration of hydrogen sulfide in the vapor phase above the fluid is proportional to the length of discoloration and can be read directly from the scale on the tube. By repeating the experiment with a treated sample, the effectiveness of the hydrogen sulfide scavenger and percent reduction can be calculated.

The samples used in the comparative experiments are described below in Table 1.

**Table 1**

| Sample Type | Compositions |
|---|---|
| A (Example 1) | a mixture of 1,ω-bis-[N,N-dibutylamino]-poly(methyleneoxy)methylene compounds |
| B | Bis(dibutylamino)methane |
| C | a mixture of 1,ω-bis-[N,N-dibutylamino]-poly(methyleneoxy)methylene compounds and bis(dibutylamino)methane |
| D | 1,3,5-hexahydro-1,3,5-trimethyltriazine |
| E (Example 2) | a mixture of 1,ω-bis-morpholino-poly(methyleneoxy)methylene compounds |
| F (Example 3) | a mixture of 1,ω-bis-[N,N-diethanolamino]-poly(methyleneoxy)methylene compounds |

Table 2 shows the results of the tests run to determine the effectiveness of the new scavenger composition versus existing products used in the art of sweetening fluids. All of the samples (A, B, C, and D) used in this experiment were of the same weight percent activity. The fuel used for this experiment was a diesel sample that was spiked with a high level of hydrogen sulfide (H₂S) gas in the laboratory. The "Can" tests were run at room temperature (RT) and at a lower dosage than expected to totally reduce the hydrogen sulfide level to zero so that the more reactive sample could be identified.

The data in Table 2 show that sample A based on the present invention was more effective than the other samples B, C and D in reducing hydrogen sulfide levels. Of particular interest is the fact that the inventive composition comprising a mixture of 1,ω-bis-[N,N-dibutylamino]-poly(methyleneoxy)methylene compounds (sample A) was more reactive than sample B based solely on dialkylaminomethane chemistry. Moreover, because sample B exhibited better performance than sample C, which is a mixture of 1,ω-bis-[N,N-dibutylamino]poly(methyleneoxy)methylene compounds and bis-(dibutylamino)methane, this further confirms that a mixture of 1,ω-bis-[N,N-dibutylamino]-poly(methyleneoxy)methylene compounds alone is more effective than bis-(dibutylamino)methane in scavenging hydrogen sulfide. 1,3,5-hexahydro-1,3,5-trimethyltriazine (sample D) was the least effective of the samples tested in the present study.

**Table 2**

| Sample | Dosage [ppm] | Temperature of Treatment [°F] | Initial H₂S Level [ppm] | Final H₂S Level [ppm] | Percent Reduction |
|---|---|---|---|---|---|
| Blank | 0 | RT | 35,000 | 35,000 | 0.00 |
| A | 5,000 | RT | 35,000 | 500 | 98.57 |
| B | 5,000 | RT | 35,000 | 13,000 | 62.85 |
| C | 5,000 | RT | 35,000 | 3,500 | 90.00 |
| D | 5,000 | RT | 35,000 | 30,000 | 14.28 |

Additional "Can" tests were conducted to compare the performance of sample A of the present invention with sample D at different temperatures. The results shown in Table 3 confirm that sample A is a better hydrogen sulfide scavenger than sample D at both ambient and elevated temperatures.

**Table 3**

| Sample | Dosage [ppm] | Temperature of Treatment [°F] | Initial H₂S Level [ppm] | Final H₂S Level [ppm] | Percent Reduction |
|---|---|---|---|---|---|
| Blank | 0 | RT | 50,000 | 50,000 | 0.00 |
| A | 25,000 | 120 | 35,000 | 0 | 100.00 |
| A | 25,000 | RT | 35,000 | 0 | 100.00 |
| D | 25,000 | 120 | 50,000 | 500 | 99.00 |
| D | 25,000 | RT | 50,000 | 28,000 | 44.00 |

The data in Table 4 were obtained by treating heavy gas oil from a catalytic cracking unit with samples A, E and F. The oil was contaminated with water and had a high hydrogen sulfide content. As the results from the "Can" tests show, all of the samples of the present invention effectively reduced the level of hydrogen sulfide in the oil.

**Table 4**

| Sample | Dosage [ppm] | Temperature of Treatment [°F] | Initial H₂S Level [ppm] | Final H₂S Level [ppm] | Percent Reduction |
|---|---|---|---|---|---|
| Blank | 0 | RT | 9,000 | 9,000 | 0.00 |
| A | 1,200 | 140 | 9,000 | 100 | 98.89 |
| A | 2,000 | 140 | 9,000 | 10 | 99.89 |
| E | 1,200 | 140 | 9,000 | 500 | 94.44 |
| F | 1,200 | 140 | 9,000 | 0 | 100.00 |

### Example 5

The composition of the present invention is also an effective mercaptan scavenger. A diesel fuel with a mercaptan level of 37.4 ppm was treated with sample A in the presence of an organic acid. Titration (UOP method 163-89) was used to measure the mercaptan concentrations. As shown in Table 5, sample A significantly reduced the mercaptan level.

**Table 5**

| Sample | Dosage [ppm] | Initial Mercaptan Level [ppm] | Final Mercaptan Level [ppm] |
|---|---|---|---|
| None | 0 | 37.4 | 37.0 |
| A | 100 | 37.4 | 5.0 |

While the present invention is described above in connection with preferred or illustrative embodiments, these embodiments are not intended to be exhaustive or limiting of the invention. Rather, the invention is intended to cover all alternatives, modifications and equivalents included within its spirit and scope, as defined by the appended claims.

## Claims

1. A composition for scavenging hydrogen sulfide, mercaptans and organic sulfides from gaseous or liquid hydrocarbon fluids, aqueous fluisds or mixtures thereof comprising: 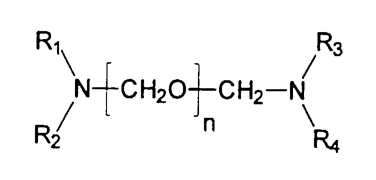
wherein n is an integer from 1 to 6; and
R₁, R₂, R₃ and R₄ are selected from the group consisting of C₁ - C₂₀ alkyl groups, aryl groups, alkylaryl groups, heterocyclic groups, cycloalkyl groups, and (CH₂)ₙ-OR₅ groups wherein R₅ is selected from the group consisting of hydrogen and C₁ - C₈ alkyl groups and n is an integer from 1 to 6.

2. The composition of claim 1 wherein R₁, R₂, R₃ and R₄ are straight chain alkyl groups having from 2 to 8 carbon atoms.

3. The composition of claim 2 wherein R₁, R₂, R₃ and R₄ are n-butyl groups.

4. The composition of claim 1 wherein R₁, R₂, R₃ and R₄ are branched alkyl groups having from 2 to 8 carbon atoms.

5. The composition of claim 1 wherein the heterocyclic groups each have an atom in the ring selected from the group consisting of oxygen, nitrogen and sulfur.

6. The composition of claim 1 wherein the cycloalkyl groups have from 5 to 6 carbon atoms.

7. A composition for scavenging hydrogen sulfide, mercaptans and organic sulfides from gaseous or liquid hydrocarbon fluids, aqueous fluids or mixtures thereof comprising: 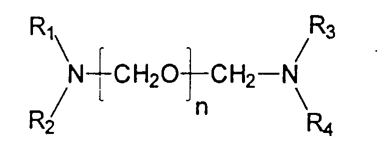
wherein n is an integer from 1 to 6; and
R₁ and R₂ are linked together and R₃ and R₄ are linked together to form alkylene rings having from 4 to 5 carbon atoms.

8. The composition of claim 7 wherein each alkylene ring has an atom selected from the group consisting of oxygen, nitrogen and sulfur.

9. A method of scavenging hydrogen sulfide, mercaptans and organic sulfides from a gaseous or liquid hydrocarbon fluid, aqueous fluid or mixture thereof comprising the step of treating said fluid with an effective scavenging amount of a solution containing a composition according to any one of claims 1 to 8.
